# EUROPEAN PATENT APPLICATION

(11) **EP 4 671 678 A1**
(43) Date of publication of application: **31.12.2025**
(21) Application number: 24184028.9
(22) Date of filing: 24.06.2024
(51) Int. Cl.: G01B 11/25

(54) **METHOD AND DEVICE FOR DETERMINING A HEIGHT MAP**

(71) Applicant: Mitutoyo Corporation, Kawasaki-shi, Kanagawa 213-8533 (JP)
(72) Inventor: Redlarski, Lukasz, 5652 XN Eindhoven (NL)
(74) Representative: EP&C

(57) **Abstract**

The current invention relates to a method for determining a height map of a sample surface of a sample. The invention further relates to a method for determining a height map of a sample surface comprising a pre-scan step and a high-accuracy scan step. The invention further relates to an optical profilometry device configured for determining a height map of the sample surface. The invention further relates to a computer readable data carrier comprising a computer program.

## Description

The current invention relates to a method for determining a height map of a sample surface of a sample. The invention further relates to a method for determining a height map of a sample surface comprising a pre-scan step and a high-accuracy scan step. The invention further relates to an optical profilometry device configured for determining a height map of the sample surface. The invention further relates to a computer readable data carrier comprising a computer program.

Optical profilometers, such as a structured illumination microscope, may be used for metrology and inspection application. Such an optical profilometer is known, e.g., from EP2327956 B1, which discloses an apparatus for determining a height of a number of spatial positions on a sample, the apparatus comprising a light source, an optical detector and a processing unit.

A constant aim is to improve the resolution of known profilometers. Generally, a method of using optical profilometers comprises measuring a volume containing a sample surface to extract topographic information on the sample surface. In order to measure the volume, either the sample surface or, part of, the profilometer is translated in x, y, and/or z directions relative to each other. However, while the known methods may allow for a high resolution, they may simultaneously be limited in terms of throughput which may make the methods unsuitable for fast or in-line measurements.

An aim of the invention is to provide a method for determining a height map of a sample surface having an increased throughput compared to known methods, e.g. from EP2327956 B1.

The aim of the invention is achieved by the method according to claim 1.

The invention relates to a method for determining a height map of a sample surface of a sample. For example, the sample surface may have a complex shape. The height map may be a map of the sample surface divided in multiple patches, wherein for each patch a height is indicated relative to other patches of the sample surface. The patches may completely cover the sample surface, or the patches may cover a portion of the sample surface.

Use may be made of an optical profilometry device, such as a structured illumination microscope comprising an optical sensor configured for measuring an optical pattern projected on the sample surface in a patch of the sample surface. The optical sensor may be an imaging device provided to be able to image the sample surface placed in the holder of the optical profilometry device. Optical means, such as lenses, may be used to guide light reflected by the sample surface to the optical sensor for measuring the optical pattern projected on the sample surface.

The optical profilometry device may further comprise a sample holder for holding the sample surface in a field of view of the optical sensor. For example, the holder may be provided integrated with the structure of the optical profilometry device or the holder may be provided separately and have to be placed such that a sample surface in the holder is in the field of view of the optical sensor during measurements.

The optical profilometry device may further comprise a projector for projecting the optical pattern on the sample surface in the holder. For example, the projector may comprise a light source and a means for generating the pattern, such as a spatial light modulating device. The projector may comprise a digital micromirror device, FLCooS (Ferroelectric liquid crystal on silicon) device, chrome on glass element, diffractive optical element, or similar to generate the optical pattern. The projector may further comprise a light source capable of producing coherent or incoherent light.

The projector may be configured for providing an optical pattern comprising multiplexed patterns having multiple spatial frequencies or characterized by a periodicity in more than one spatial dimensions. Images of these multiplexed patterns may be processed to separate the multiplexed pattern into two or more independent patterns, e.g. based on the different spatial dimensions, e.g. using Fourier analysis.

The projector may further be configured for providing an optical pattern such as a modified uniformly redundant array (MURA) pattern. MURA patterns have a uniform spatial frequency spectrum which may allow them to be used in the method of the invention. Other optical patterns that may be used include fractal patterns.

The method comprises providing the sample in a sample holder, e.g. of an optical profilometry device, at a measurement distance from an optical sensor. The measurement distance may be determined along an optical axis of an optical sensor used for measuring afixed measurement distance, e.g. such that the sample in the sample holder is kept at a fixed distance from the optical sensor while determining the height map according to the method.

The method comprises projecting a first optical pattern component and a second optical pattern component on the sample surface in the sample holder with a projector, wherein at least one spatial frequency of the first optical pattern component is different from a spatial frequency of the second optical pattern component or wherein at least one periodicity direction of the first optical pattern component is different from a periodicity direction of the second optical pattern component. The first optical pattern component and the second optical pattern component may be pattern components of different patterns, e.g. the first and second pattern components maybe projected subsequently on the sample surface, or the first and second pattern component are part of a single pattern, e.g. a multiplexed pattern or a MURA pattern, that is projected onto the sample surface. The first optical pattern component is different from the second optical pattern component in that the first optical pattern component has at least one spatial frequency different from the second optical pattern component and/or the first optical pattern component has a different periodicity direction compared to the second optical pattern component. For example, a periodicity of the first optical pattern component may be along an x-direction of the sample surface and a periodicity of the second optical pattern component may be along a y-direction, orthogonal to the x-direction, of the sample surface.

The method further comprises dividing the sample surface in multiple patches, e.g. that cover the sample surface. For example, the sample surface may be divided into patches by dividing an image of the sample surface into multiple patches depending on groups of pixels. A size of each patch may be determined based on a density of the first optical pattern component and the second optical pattern component, wherein, for example, a minimal size of the patches is greater than the periodicity of the coarsest component of the first optical pattern component and the second optical pattern component.

In each patch, the projected first optical pattern component and the projected second optical pattern component that are projected onto the sample surface are measured with the optical sensor. During measurement of the optical pattern components, the sample is provided at the measurement distance from the optical sensor. The optical sensor may simultaneously measure the first optical pattern component and the second optical pattern component or the optical sensor may measure the optical pattern components consecutively.

In each patch a contrast of the measured first optical pattern component and a contrast of the measured second optical pattern component are determined. For example, the first pattern component and the second pattern component may be measured with the optical sensor and the contrast of the so-obtained images may be determined in each patch, or the contrast may be measured directly with the optical sensor. For example, for each patch a difference between a brightest pixel and a darkest pixel may be determined to determine the contrast of the respective optical pattern component in the patch. In this way, for each optical pattern, in each patch a contrast may be determined covering the sample surface.

For each patch a defocus position based on the contrast of the measured first pattern component and the contrast of the measured second pattern component is determined wherein use is made of a calibration relationship which relates a ratio of the first contrast and the second contrast to the defocus position. A ratio of the contrast of the first pattern and the contrast of the second pattern may be determined and compared to the calibration relationship to determine the defocus position of that patch.

By determining the defocus position for each patch a map of the sample surface may be determined which for each point of the map has a defocus position. Since the defocus position is a relative distance from the infocus position, the so-obtained map may be interpretated or translated into a height map of the sample surface giving a relative height of each patch.

The calibration relationship is obtained based on a first contrast relationship and a second contrast relationship. The relationship may relate to a curve, look-up table, function or other suitable relationship. For example, the second contrast relationship may be divided by the first contrast relationship. The calibration relationship relates a ratio of the first contrast and the second contrast to a defocus position. By taking the ratio of the first contrast and the second contrast the calibration relationship may have a 1-1 relation between the ratio of the contrasts and the defocus position, thus uniquely relating a ratio of the contrasts to a defocus position. For example, the calibration relationship may have a 1-1 relation when the contrast relationships, or a fit thereof used for obtaining the calibration relationship, relate at most two different defocus to a single contrast.

The first contrast relationship of the first optical pattern relates the contrast of the first optical pattern component to the defocus of the first optical pattern component. The contrast of the pattern may be a measure of the difference between the bright and dark features of the pattern as it is projected, e.g. on a surface or a patch of a surface. The defocus of the first optical pattern component may be seen as a measure of how out of focus the pattern component is as it is projected on a surface. The defocus may depend on a relative distance from a surface whereon the pattern component is projected and the optical sensor of the profilometry device.

The second contrast relationship of the second optical pattern component relates the contrast of the second optical pattern component to the defocus of the second optical pattern component. The first optical pattern component differs from the second optical pattern component. For example, the first optical pattern component and the second optical pattern component may be projected simultaneously on the sample surface but may have different spatial frequencies or be oriented differently relative to each other. The first and second optical patterns components may also be projected consecutively on the sample surface.

The first and second contrast relationships may be obtained as disclosed herein.

Generally, a contrast of a pattern component may improve when the pattern component is more in focus of the optical sensor, thus a relation between the contrast and the defocus of the pattern component depending on the relative position of the sample to the optical sensor may exist. For example, a contrast may be highest when the pattern component is in focus of the optical sensor and decrease when the sample on which the pattern component is projected is moved either away from or closer to the optical sensor. As a result, generally the contrast relationship relates a single contrast to multiple defocus positions, which defocus positions measures how far the sample on which the pattern is projected is from the infocus position.

The invention is based on the insight that aberrations, for example spherical astigmatism, etc, of a measurement device, such as an optical profilometry device, cause different projected pattern components to have a different focal plane axial distance from the device. This results in a difference in the contrast against defocus position, the contrast relationship, between the different optical patterns. It is because the difference exists that the ratio between the contrast relationships is not constant and allows to, e.g. uniquely, relate the contrast to the defocus position. In this way, the invention uses the difference between the different contrast relationships to determine the height map.

The aberrations may depend on the optical profilometry device and the pattern components used. Thus the calibration relationship may be obtained in principle once for each optical profilometry device and each choice of optical pattern components, after which the relationship may be used in the method according to the invention for the given pattern components and measurement device.

Objective lenses having enhanced aberrations compared to normal lenses may be used by the invention to enhance the effect of the aberrations and increase the effectiveness of the method of the invention in determining a height map of the sample surface.

In embodiments, the method further comprises:
- obtaining the first contrast relationship of the first optical pattern component;
- obtaining the second contrast relationship of the second optical pattern component; and
- obtaining the calibration relationship based on the ratio of the first contrast relationship and the second contrast relationship.

In embodiments, the method further comprises obtaining the first contrast relationship and/or the second contrast relationship by:
- projecting a respective one of the first optical pattern component and/or the second optical pattern component on a test surface, preferably on a flat test surface, e.g. provided in the sample holder;
- moving the test surface, e.g. by moving the sample holder, in an axial direction relative to the optical sensor between multiple measurement positions;
- measuring, in each measurement position, the respective one of the projected first optical pattern component and/or the projected second pattern component with the optical sensor;
- determining, in each measurement position, a contrast and a defocus of the respective measured optical pattern component; and
- determining the respective contrast relationship by fitting, e.g. using a Gaussian fit, the determined contrast and defocus in the multiple measurement positions with the respective contrast relationship.

In these embodiments the first contrast relationship and/or the second contrast relationship may be obtained by projecting the associated pattern component onto the sample surface to determine the contrast relationship as claimed. The first and second pattern components may be projected simultaneously so that both the first and second contrast relationships may be determined, e.g. by filtering the associated pattern components.

In further embodiments, the first optical pattern component and the second optical pattern component are projected on the test surface simultaneously, e.g. in a multiplexed pattern or a modified uniformly redundant array (MURA) pattern, wherein the method step of determining, in each measurement position, a contrast and a defocus of the respective optical pattern, comprises:
- filtering the respective one of the first optical pattern component and/or the second optical pattern component from the measured projected pattern.

In embodiments, the method further comprises obtaining the first contrast relationship and/or the second contrast relationship by:
- training a computer model by providing a data set comprising multiple measurements of a test surface using different optical pattern components to obtain the first contrast relationship and/or the second contrast relationship.

In embodiments, the first pattern component and second pattern component are projected on the sample surface simultaneously, e.g. in a multiplexed pattern or a MURA pattern, wherein the method further comprises:
- filtering the first optical pattern component or the second optical pattern component from the measured projected pattern.

The invention further relates to a method for determining a height map of a sample surface comprising a pre-scan and a high accuracy scan, wherein use is made of the method according to the invention in the pre-scan. The method for determining the height map according to the invention allows for a higher throughput thus allowing for example for in-line measurements. However, for a more detailed high accuracy scan another method may be used. Thus, the method of the invention may be suitable for determining a pre-scan of the sample surface to allow for a better high accuracy scan.

The invention further relates to an optical profilometry device for determining a height map of a sample surface of a sample, comprising:
- an optical sensor configured for measuring an optical pattern component projected on the sample surface;
- a sample holder for holding sample surface of the sample in a field of view of the optical sensor;
- a projector for projecting the optical pattern component on the sample surface of the sample in the holder; and
- a processor functionally connected to the optical sensor and the projector,
wherein the profilometry device, e.g. the processor thereof, is configured to:
- project a first optical pattern component and a second optical pattern component on the sample surface of the sample provided in the sample holder with the projector, wherein at least one spatial frequency of the first optical pattern component is different from a spatial frequency of the second optical pattern component or wherein at least one periodicity direction of the first optical pattern component is different from a periodicity direction of the second optical pattern component;
- divide the sample surface, e.g. by the processor, in multiple patches covering the sample surface;
- measure, in each patch, by the optical sensor, the projected first optical pattern component and the projected second optical pattern component on the sample surface in the sample holder with the optical sensor;
- determine, for each patch, by the processor, a contrast of the projected first pattern component and a contrast of the projected second pattern component;
- determine, for each patch, by the processor, a defocus position based on the determined contrast of the measured first pattern component and the determined contrast of the measured second pattern component, wherein use is made of a calibration relationship which relates a ratio of the first contrast and the second contrast to the defocus position
- determine, by the processor, the height map of the sample surface based on the defocus position of each patch,
wherein the calibration relationship is obtained based on a ratio of a first contrast relationship and a second contrast relationship, wherein the first contrast relationship relates the contrast of the first pattern component to the defocus of the first pattern component and the second contrast relationship relates the contrast of the second pattern component to the defocus of the second pattern component.

In embodiments, the profilometry device, e.g. the processor thereof, is further configured to:
- obtain the first contrast relationship of the first optical pattern component;
- obtain the second contrast relationship of the second optical pattern component; and
- obtain the calibration relationship based on the ratio of the first contrast relationship and the second contrast relationship.

In embodiments, the profilometry device, e.g. the processor thereof, is further configured to obtain the first contrast relationship and/or the second contrast relationship by:
- projecting by the projector a respective one of the first optical pattern component and/or the second optical pattern component on a test surface, preferably on a flat test surface, e.g. provided in the sample holder;
- moving the test surface, e.g. by moving the sample holder, in an axial direction relative to the optical sensor between multiple measurement positions;
- measuring, in each measurement position, the respective one of the projected first optical pattern component and/or the projected second pattern component with the optical sensor;
- determining, in each measurement position, by the processor, a contrast and a defocus of the respective measured optical pattern component; and
- determining, by the processor, the respective contrast relationship by fitting, e.g. using a Gaussian fit, the determined contrast and defocus in the multiple measurement positions with the respective contrast relationship.

In embodiments, the optical profilometry device is further configured to simultaneously project the first optical pattern component and the second optical pattern component on the test surface, e.g. in a multiplexed pattern or a modified uniformly redundant array (MURA) pattern, wherein the processor is configured to, when determining, in each measurement position, a contrast and a defocus of the respective optical pattern:
- filter the respective one of the first optical pattern component and/or the second optical pattern component from the measured projected pattern.

In embodiments, the optical profilometry device, e.g. the processor thereof, is further configured to obtain the first contrast relationship and/or the second contrast relationship by using a computer model trained by providing a data set comprising multiple measurements of a test surface using different optical patterns components to obtain the first contrast relationship and/or the second contrast relationship.

In embodiments, the optical profilometry device, e.g. the projector thereof, is further configured to simultaneously project the first pattern component and second pattern component on the sample surface, e.g. in a multiplexed pattern or MURA pattern, wherein the processor is configured to:
- filter the first optical pattern component or the second optical pattern component from the measured projected pattern.

The invention further relates to a device, e.g. a profilometry device, for determining a height map of a sample surface comprising an optical profilometry device according to the invention for performing a pre-scan of the sample surface.

The invention further relates to a computer readable data carrier comprising a computer program that, when run on a processor of an optical profilometry device according to the invention, causes the optical profilometry device to perform the method according to the invention.

The optical profilometry device, e.g. a processor thereof, may be configured to perform any of the embodiments of the method of the invention.

Embodiments of the invention will now be described, by way of example only, with reference to the accompanying schematic drawings in which corresponding reference symbols indicate corresponding parts, and in which:
- Figure 1 depicts an optical profilometry device such as used by the invention;
- Figure 2a depicts a first contrast relationship and a second contrast relationship; and
- Figure 2b depicts a calibration relationship obtained from the contrast relationships of figure 2a.

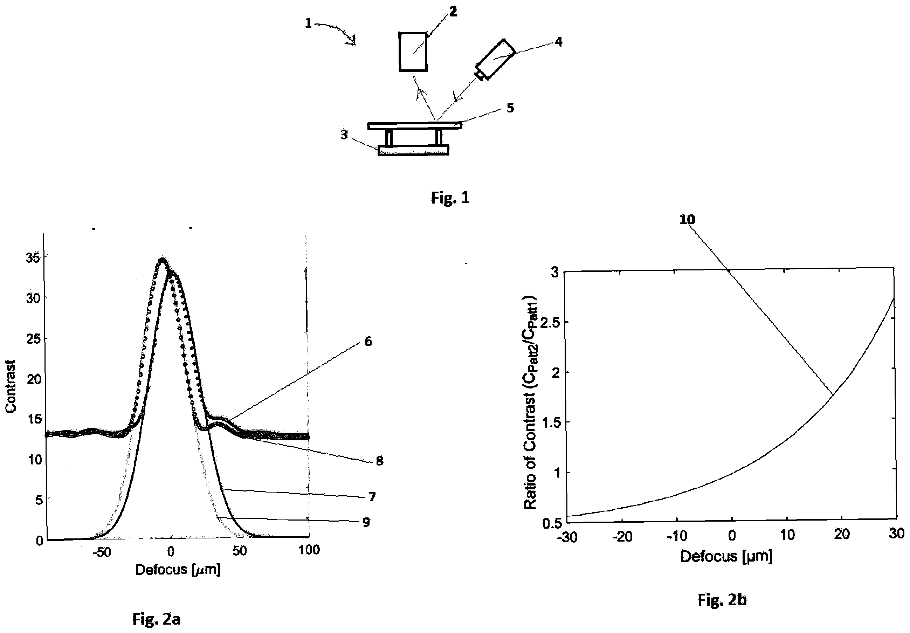

Figure 1 schematically depicts an optical profilometry device 1 comprising an optical sensor 2, a sample holder 3 holding a sample with a sample surface 5, and a projector 4. The optical sensor 2 is configured for measuring an optical pattern, e.g. an optical pattern component, projected on the sample surface 5 by the projector 4. For example, the optical sensor 2 may be configured to measure the optical pattern component in a patch of the sample surface 5, wherein the size of the patch may be determined by a resolution with which the optical sensor 2 may measure the sample surface 5.

The holder 3 is configured to hold the sample surface 5 in the field of view of the optical sensor 2 and such that the projector 4 may project optical pattern components on the sample surface 5 such that the optical sensor 2 may measure the optical pattern components on the sample surface 5. The holder 3 and optical sensor 2 may be configured to move in an axial direction relative to each other to vary a distance therebetween. By varying the relative distance the contrast relationship and/or calibration relationship may be determined. The distance need not be varied when determining the height map using the obtained calibration relationship.

The profilometry device 2 is configured to project a first optical pattern component and a second optical pattern component on the sample surface 5 with the projector 4, wherein the first optical pattern component differs from the second optical pattern component. For example, the projector 4 may comprise a spatial light modulator such as a digital micromirror, FLCoS, chrome on glass element or a diffractive optical element. The projector 4 may comprise other means to project the pattern components on the sample surface 5.

The first pattern component and second pattern component may differ in spatial frequency on the sample surface 5, pattern orientation and/or direction, pattern type, or any other relevant distinguishing feature.

The sample surface 5 is then divided into multiple patches covering the sample surface 5. For example, the number and size of the patches may be determined by properties of the optical sensor 2, such as the resolution, and/or by properties of the spatial pattern components, such as the density of the pattern components wherein the minimum size of the patch is greater than the periodicity of the coarsest values for each patch.

The optical profilometry device 2, e.g. a processor thereof, is configured to determine for each patch a contrast of the projected first pattern component and a contrast of the projected second pattern component. For example, the contrast may be determined by measuring the brightest and darkest area of each patch directly. The contrast may also be determined by measuring the pattern component projected in the patch and performing an image analysis on the measurement.

The optical profilometry device 2 is then configured to, for each patch, determine a defocus position based on the determined contrast of the projected first pattern component and the contrast of the projected second pattern component. A calibration relationship 10, such as shown in figure 2b, is used which relates a relationship between the contrast of the first pattern and the contrast of the second pattern to the defocus position allowing to determine the defocus position based on the determined contrasts. Thus, in determining the height map of the sample surface the defocus of the sample may not have to be measured directly.

By determining the defocus in each patch a height map of the sample surface 5 may be determined based thereon.

Figure 2a depicts a first contrast 6 as determined for a first optical pattern component and a second contrast 8 as determined for a second optical pattern component on a test surface.

Figure 2a further shows a Gaussian fit 7 of the first contrast 6 and a Gaussian fit 9 of the second contrast 8, which Gaussian fits 7, 9 are in this example the contrast relationships used to determine the calibration relationship 10 shown in figure 2b.

The first and second contrast relationships 7 and 9 shown in figure 2a may be determined by projected a respective one of the first optical pattern component and the second optical pattern component on a flat test surface. The flat test surface is then moved in an axial direction relative to the optical sensor 2, e.g. by moving the flat surface or the optical sensor 2, between multiple measurement positions and in each measurement position a contrast and a defocus of the respective optical pattern component is determined. The measurements of contrast and defocus are shown in figure 2a as the curves 6 and 8. The respective contrast relationship is then determined by fitting using a Gaussian fit the determined contrast and defocus in the multiple measurement positions with the respective contrast relationship 7, 9.

The invention allows to determine the calibration relationship for respective patterns components and optical profilometry device 2 once and then use the determined calibration relationship for determining multiple height maps using the respective pattern components and optical profilometry device 2.

## Claims

1. Method for determining a height map of a sample surface of a sample, wherein the method comprises:
- providing the sample in a sample holder at a measurement distance from an optical sensor;
- projecting a first optical pattern component and a second optical pattern component on the sample surface in the sample holder with a projector, wherein at least one spatial frequency of the first optical pattern component is different from a spatial frequency of the second optical pattern component or wherein at least one periodicity direction of the first optical pattern component is different from a periodicity direction of the second optical pattern component;
- dividing the sample surface in multiple patches;
- measuring, in each patch, the projected first optical pattern component and the projected second optical pattern component on the sample surface in the sample holder with the optical sensor;
- determining, for each patch, a contrast of the measured first pattern component and a contrast of the measured second pattern component;
- determining, for each patch, a defocus position based on the determined contrast of the measured first pattern component and the determined contrast of the measured second pattern component, wherein use is made of a calibration relationship which relates a ratio of the first contrast and the second contrast to the defocus position; and
- determining the height map of the sample surface based on the defocus position of each patch,
wherein the calibration relationship is obtained based on a ratio of a first contrast relationship and a second contrast relationship, wherein the first contrast relationship relates the contrast of the first pattern component to the defocus of the first pattern component and the second contrast relationship relates the contrast of the second pattern component to the defocus of the second pattern component.

2. Method according to claim 1, wherein the method further comprises:
- obtaining the first contrast relationship of the first optical pattern component;
- obtaining the second contrast relationship of the second optical pattern component; and
- obtaining the calibration relationship based on the ratio of the first contrast relationship and the second contrast relationship.

3. Method according to claim 2, wherein the method further comprises, obtaining the first contrast relationship and/or the second contrast relationship by:
- projecting a respective one of the first optical pattern component and/or the second optical pattern component on a test surface, preferably on a flat test surface, e.g. provided in the sample holder;
- moving the test surface, e.g. by moving the sample holder, in an axial direction relative to the optical sensor between multiple measurement positions;
- measuring, in each measurement position, the respective one of the projected first optical pattern component and/or the projected second pattern component with the optical sensor;
- determining, in each measurement position, a contrast and a defocus of the respective measured optical pattern component; and
- determining the respective contrast relationship by fitting, e.g. using a Gaussian fit, the determined contrast and defocus in the multiple measurement positions with the respective contrast relationship.

4. Method according to claim 3, wherein the first optical pattern component and the second optical pattern component are projected on the test surface simultaneously, e.g. in a multiplexed pattern or a modified uniformly redundant array (MURA) pattern, wherein the method step of determining, in each measurement position, a contrast and a defocus of the respective optical pattern, comprises:
- filtering the respective one of the first optical pattern component and/or the second optical pattern component from the measured projected pattern.

5. Method according to one or more of the preceding claims, wherein the method further comprises, for obtaining the first contrast relationship and/or the second contrast relationship:
- training a computer model by providing a data set comprising multiple measurements of a test surface using different optical pattern components to obtain the first contrast relationship and/or the second contrast relationship.

6. Method according to one or more of the preceding claims, wherein the first pattern component and second pattern component are projected on the sample surface simultaneously, e.g. in a multiplexed pattern or MURA pattern, wherein the method further comprises:
- filtering the first optical pattern component or the second optical pattern component from the measured projected pattern.

7. Method for determining a height map of a sample surface comprising a pre-scan and a high accuracy scan, wherein use is made of the method according to one or more of the preceding claims in the pre-scan.

8. Optical profilometry device for determining a height map of a sample surface of a sample, comprising:
- an optical sensor configured for measuring an optical pattern component projected on the sample surface;
- a sample holder for holding sample surface of the sample in a field of view of the optical sensor;
- a projector for projecting the optical pattern component on the sample surface of the sample in the holder; and
- a processor functionally connected to the optical sensor and the projector,
wherein the profilometry device, e.g. the processor thereof, is configured to:
- project a first optical pattern component and a second optical pattern component on the sample surface of the sample provided in the sample holder with the projector, wherein at least one spatial frequency of the first optical pattern component is different from a spatial frequency of the second optical pattern component or wherein at least one periodicity direction of the first optical pattern component is different from a periodicity direction of the second optical pattern component;
- divide the sample surface, e.g. by the processor, in multiple patches covering the sample surface;
- measure, in each patch, by the optical sensor, the projected first optical pattern component and the projected second optical pattern component on the sample surface in the sample holder with the optical sensor;
- determine, for each patch, by the processor, a contrast of the projected first pattern component and a contrast of the projected second pattern component;
- determine, for each patch, by the processor, a defocus position based on the determined contrast of the measured first pattern component and the determined contrast of the measured second pattern component, wherein use is made of a calibration relationship which relates a ratio of the first contrast and the second contrast to the defocus position
- determine, by the processor, the height map of the sample surface based on the defocus position of each patch,
wherein the calibration relationship is obtained based on a ratio of a first contrast relationship and a second contrast relationship, wherein the first contrast relationship relates the contrast of the first pattern component to the defocus of the first pattern component and the second contrast relationship relates the contrast of the second pattern component to the defocus of the second pattern component.

9. Optical profilometry device according to claim 8, wherein the profilometry device, e.g. the processor thereof, is further configured to:
- obtain the first contrast relationship of the first optical pattern component;
- obtain the second contrast relationship of the second optical pattern component; and
- obtain the calibration relationship based on the ratio of the first contrast relationship and the second contrast relationship.

10. Optical profilometry device according to claim 9, wherein the profilometry device, e.g. the processor thereof, is further configured to obtain the first contrast relationship and/or the second contrast relationship by:
- projecting by the projector a respective one of the first optical pattern component and/or the second optical pattern component on a test surface, preferably on a flat test surface, e.g. provided in the sample holder;
- moving the test surface, e.g. by moving the sample holder, in an axial direction relative to the optical sensor between multiple measurement positions;
- measuring, in each measurement position, the respective one of the projected first optical pattern component and/or the projected second pattern component with the optical sensor;
- determining, in each measurement position, by the processor, a contrast and a defocus of the respective measured optical pattern component; and
- determining, by the processor, the respective contrast relationship by fitting, e.g. using a Gaussian fit, the determined contrast and defocus in the multiple measurement positions with the respective contrast relationship.

11. Optical profilometry device according to claim 10, wherein the optical profilometry device is further configured to simultaneously project the first optical pattern component and the second optical pattern component on the test surface, e.g. in a multiplexed pattern or a modified uniformly redundant array (MURA) pattern, wherein the processor is configured to, when determining, in each measurement position, a contrast and a defocus of the respective optical pattern:
- filter the respective one of the first optical pattern component and/or the second optical pattern component from the measured projected pattern.

12. Optical profilometry device according to one or more of the claims 8 - 11, wherein the optical profilometry device, e.g. the processor thereof, is further configured to obtain the first contrast relationship and/or the second contrast relationship by using a computer model trained by providing a data set comprising multiple measurements of a test surface using different optical patterns components to obtain the first contrast relationship and/or the second contrast relationship.

13. Optical profilometry device according to one or more of the claims 8 - 12, wherein the optical profilometry device, e.g. the projector thereof, is further configured to simultaneously project the first pattern component and second pattern component on the sample surface, e.g. in a multiplexed pattern or MURA pattern, wherein the processor is configured to:
- filter the first optical pattern component or the second optical pattern component from the measured projected pattern.

14. Device for determining a height map of a sample surface comprising an optical profilometry device according to one or more of the claims 8 - 13 for performing a pre-scan of the sample surface.

15. Computer readable data carrier comprising a computer program that, when run on a processor of an optical profilometry device according to one or more of the claims 8-14, causes the optical profilometry device to perform the method according to one or more of the claims 1-7.
